# EUROPEAN PATENT APPLICATION

(11) **EP 2 647 515 A1**
(43) Date of publication of application: **09.10.2013**
(21) Application number: 13162520.4
(22) Date of filing: 05.04.2013
(51) Int. Cl.: B60K 11/08, F01P 7/10, F01P 7/12

(54) **Grille shutter device at a front portion of a vehicle**

(30) Priority: 06.04.2012 JP 2012087641
(71) Applicant: AISIN SEIKI KABUSHIKI KAISHA, Kariya-shi, Aichi-ken 448-8650 (JP)
(72) Inventor: Sugiyama, Yohei, KARIYA-SHI, AICHI-KEN, 448-8650 (JP)
(74) Representative: Intès, Didier Gérard André

(57) **Abstract**

A grille shutter device includes a shutter mechanism (11) provided within a grille opening portion formed at a front portion of a vehicle body and configured to control a flow rate of air into the vehicle body, a drive device (12) driven by a motor (18) to open and close the shutter mechanism, and a control device (20) supplying a driving power to the motor. The control device includes a drive circuit (22) provided at a portion of a power supply passage (Lp) between an in-vehicle power source (21) and the motor (18), a control circuit (23) controlling a duty ratio of the drive circuit (22), and a power supply voltage detection portion (27, 23) detecting a power supply voltage (Vb) of the in-vehicle power source. The control circuit includes a correction portion (23) correcting the duty ratio based on the power supply voltage (Vb) to restrain a change of a speed of the motor (18) caused by a fluctuation of the power supply voltage (Vb).

## Description

### TECHNICAL FIELD

This disclosure generally relates to a grille shutter device.

### BACKGROUND DISCUSSION

A known grille shutter device is disclosed in JP2010-260440A, which will be hereinafter referred to as Reference 1. Reference 1 discloses a grille shutter device configured to control a flow rate of air flowing into an engine compartment from a grille opening portion based on opening and closing operations of a shutter mechanism provided at the grille opening portion at a front portion of a vehicle body.

In a case where a vehicle is driven at a high speed, for example, the shutter mechanism is brought to a closed state to thereby restrict an air flow to the engine compartment. As a result, an aerodynamic performance of the vehicle, for example, a Cd value (coefficient of drag), may improve. At a time of an engine start, the air flow to a radiator at the engine compartment is restrained to thereby reduce time for warming up the engine. In a case where an engine temperature is increasing, the shutter mechanism is brought to an open state to thereby increase the air flow to the engine compartment so that the engine temperature may be appropriately controlled.

An output voltage of an in-vehicle power source such as a battery mounted at a vehicle, for example, may fluctuate or vary depending on a driving condition or a surrounding environment of the vehicle. That is, the output voltage of the in-vehicle power source, i.e., a power supply voltage, may fluctuate depending on an engine speed or an outside air temperature, for example. Therefore, according to the grille shutter device disclosed in Reference 1, in a case where the voltage supplied to a drive motor of the shutter mechanism decreases, a normal opening and closing control is forcedly finished to thereby open the shutter mechanism.

That is, the shutter mechanism is inhibited from being stuck in the closed state by a decrease of an output of the drive motor (i.e., a motor output) caused by a decrease of the power supply voltage. As a result, a lack of air flowing to an inside of the vehicle because of the shutter mechanism stuck in the closed state is inhibited to thereby ensure a sufficient cooling performance of the grille shutter device.

Nevertheless, the fluctuation or variation of the power supply voltage as described above is also an issue to solve in view of quietness of the grille shutter device. Specifically, a large motor output is desirable to promptly operate the shutter mechanism in view of an original function of the shutter mechanism. In this case, however, an operation noise of the shutter mechanism may increase by an increase of an operation speed thereof. Therefore, conventionally, the motor output, i.e., a duty ratio of a drive circuit that supplies a driving power to the motor, is decided by finding a compromise to satisfy the aforementioned conflicting requirements, i.e., the large motor output and the quietness.

Nevertheless, in a case where the power supply voltage fluctuates, the motor output changes due to such fluctuation. As a result, the shutter mechanism may operate at a higher speed than a speed initially expected, which may lead to a large operation noise. Alternatively, the shutter mechanism operates at a lower speed, which may lead to a decrease of responsiveness of the shutter mechanism.

A need thus exists for a grille shutter device that obtains both quietness and responsiveness even in a case where a power supply voltage fluctuates.

### SUMMARY

According to an aspect of this disclosure, a grille shutter device includes a shutter mechanism provided within a grille opening portion that is formed at a front portion of a vehicle body and configured to control a flow rate of air into the vehicle body, a drive device driven by a motor to open and close the shutter mechanism, and a control device supplying a driving power to the motor to control an operation of the drive device. The control device includes a drive circuit provided at a portion of a power supply passage between an in-vehicle power source and the motor, a control circuit controlling a duty ratio of the drive circuit, and a power supply voltage detection portion detecting a power supply voltage of the in-vehicle power source. The control circuit includes a correction portion correcting the duty ratio based on the power supply voltage to restrain a change of a speed of the motor caused by a fluctuation of the power supply voltage.

Accordingly, even in a case where the power supply voltage of the in-vehicle power source fluctuates, the change of the speed of the motor caused by the fluctuation of the power supply voltage may be restrained. As a result, an operation speed change of the shutter mechanism may be restrained to achieve both quietness and high responsiveness of the shutter mechanism, i.e., of the grille shutter device.

The correction portion may correct the duty ratio to a smaller value than a value obtained before a correction in a case where the power supply voltage is greater than a first voltage value.

Accordingly, the duty ratio of the drive circuit is corrected to a small value to thereby restrain an increase of a motor output caused by an increase of the power supply voltage. As a result, the operation speed of the shutter mechanism is inhibited from increasing by an increase of a motor speed. The operating noise of the shutter mechanism is restrained to ensure quietness or silence of the grille shutter device.

The correction portion may correct the duty ratio to a greater value than a value obtained before a correction in a case where the power supply voltage is smaller than a second voltage value.

Accordingly, the duty ratio of the drive circuit is corrected to a large value to thereby restrain a decrease of the motor output caused by a decrease of the power supply voltage. As a result, the operation speed of the shutter mechanism is inhibited from decreasing by a decrease of the motor speed and the high responsiveness is ensured. In addition, instability of opening and closing operations of the shutter mechanism caused by the decrease of the motor output may be inhibited.

The correction portion may correct the duty ratio so that the speed of the motor is constant.

Accordingly, both the quietness and responsiveness may be achieved at a higher level.

The grille shutter device may further include a vehicle speed detection portion detecting a vehicle speed, wherein the correction portion changes a correction amount of the duty ratio based on the vehicle speed.

In a case where the vehicle speed increases, noises or sounds such as a vehicle driving sound and an engine noise, for example, increase. As a result, an operating noise of the grille shutter device may become less obvious. Accordingly, in such case, the correction amount of the duty ratio may be reduced, i.e., changed to a small value, or become zero so that the increase of the motor output caused by the increase of the power supply voltage may become a benefit of the improved responsiveness. In addition, when the vehicle speed increases, a wind pressure applied to the shutter mechanism increases. Thus, in a case where the power supply voltage decreases under the aforementioned circumstances, the correction amount of the duty ratio is brought to increase to thereby further stably open and close the shutter mechanism.

The grille shutter device may further include a vehicle speed detection portion detecting a vehicle speed, wherein the correction portion decreases a correction amount of the duty ratio at a time of correcting the duty ratio to the smaller value than the value obtained before the correction in a case where the vehicle speed is equal to or greater than a first vehicle speed.

In a case where the vehicle speed increases, noises or sounds such as the vehicle driving sound and the engine noise, for example, increase. As a result, the operating noise of the grille shutter device may become less obvious. Accordingly, in such case, the correction amount of the duty ratio may be reduced, i.e., changed to a small value, or become zero so that the increase of the motor output caused by the increase of the power supply voltage may become a benefit of the improved responsiveness.

The grille shutter device may further include a vehicle speed detection portion detecting a vehicle speed, wherein the correction portion increases a correction amount of the duty ratio at a time of correcting the duty ratio to the greater value than the value obtained before the correction in a case where the vehicle speed is equal to or greater than a second vehicle speed.

When the vehicle speed increases, a wind pressure applied to the shutter mechanism increases. Thus, in a case where the power supply voltage decreases under the aforementioned circumstances, the correction amount of the duty ratio is brought to increase to thereby further stably open and close the shutter mechanism.

The first voltage value may be specified to be greater than a third voltage value and the second voltage value may be specified to be smaller than the third voltage value.

Because the correction portion is inhibited from correcting the duty ratio within a predetermined range between the first and second voltage values, the correction is performed when necessary.

The first voltage value may be equal to the second voltage value.

Accordingly, the duty ratio may be promptly corrected.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic view illustrating a configuration of a vehicle at which a grille shutter device according to an embodiment is mounted;

Fig. 2 is a control block diagram of the grill shutter device according to the embodiment disclosed here;

Fig. 3 is a flowchart illustrating procedures of an opening and closing control;

Fig. 4 is a flowchart illustrating procedures of a duty ratio correction control based on a power supply voltage according to the embodiment disclosed here;

Fig. 5 is a flowchart illustrating procedures of the duty ratio correction control according to another example of the embodiment;

Fig. 6 is a flowchart illustrating procedures of the duty ratio correction control according to still another example of the embodiment; and

Fig. 7 is a flowchart illustrating procedures of the duty ratio correction control according to still another example of the embodiment.

### DETAILED DESCRIPTION

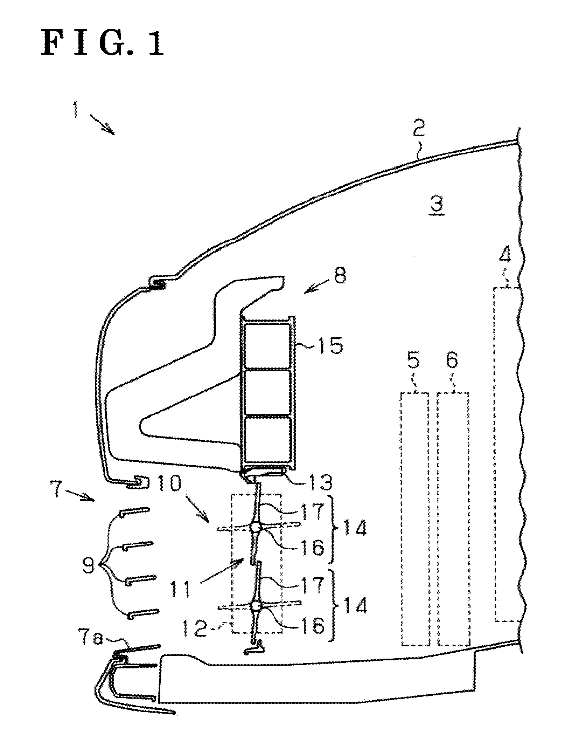

An embodiment of a grille shutter device will be explained with reference to the attached drawings. In a vehicle 1 illustrated in Fig. 1, a radiator 5 is accommodated within an engine compartment 3 formed at an inside of a vehicle body 2 so as to cool an engine 4. In addition, a grille opening portion 7 is formed at a front portion of the vehicle body 2 (i.e., a left end portion in Fig. 1). An outer space at a front side of the vehicle 1 and an inner space of the vehicle body 2 are connected to each other by the grille opening portion 7. The radiator 5 is arranged at a front side of the engine 4 so that air flowing from the grille opening portion 7 to the engine compartment 3 hits or contacts the radiator 5.

A fan 6 is provided at a rear side (i.e., a right side in Fig. 1) of the radiator 5. The fan 6 rotates so that air effectively flows to the radiator 5.

According to the present embodiment, the grille opening portion 7 is formed at a lower side of a bumper 8. A front grille 9 constituting a decorative surface of the grille opening portion 7 is attached to an opening edge 7a of the grille opening portion 7. That is, the front grille 9 serves as a lower grille. According to the present embodiment, a grille shutter device 10 is provided at the vehicle 1 for controlling a flow rate of air flowing into the engine compartment 3 from the grille opening portion 7.

Specifically, the grille shutter device 10 includes a shutter mechanism 11 that opens and closes so as to control an air flow rate, and an actuator portion 12 serving as a drive device to open and close the shutter mechanism 11.

The shutter mechanism 11 includes plural movable fins 14 arranged and aligned within a frame 13 that is substantially formed in a quadrangular form. Specifically, the frame 13 is arranged within the grille opening portion 7 in a state where an upper end of the frame 13 is fixed to a bumper reinforcement 15. Each of the movable fins 14 is rotatable about a rotation shaft 16 that extends in a width direction of the frame 13 corresponding to a width direction of the vehicle 1 (i.e., in a direction perpendicular to a sheet surface of Fig. 1). Each of the movable fins 14 includes a fin portion 17 configured to close or block an inner portion of the frame 13 by rotating about the rotation shaft 16.

Specifically, the shutter mechanism 11 is brought to an open state in a case where the movable fins 14 rotate in a direction (i.e., in a clockwise direction in Fig. 1) in which the fin portions 17 are arranged in parallel with a flow direction of air flowing from the grille opening portion 7. In addition, the shutter mechanism 11 is brought to a closed state in a case where the movable fins 14 rotate in a direction (i.e., in a counterclockwise direction in Fig. 1) in which the fin portions 17 are arranged perpendicular to the flow direction of air flowing from the grille opening portion 7. In a state where the movable fins 14 are arranged at positions corresponding to the closed state of the shutter mechanism 11, end portions of the movable fins 14 (i.e., edges of the fin portions 17) adjacent to each other overlap to thereby close or block the inner portion of the frame 13.

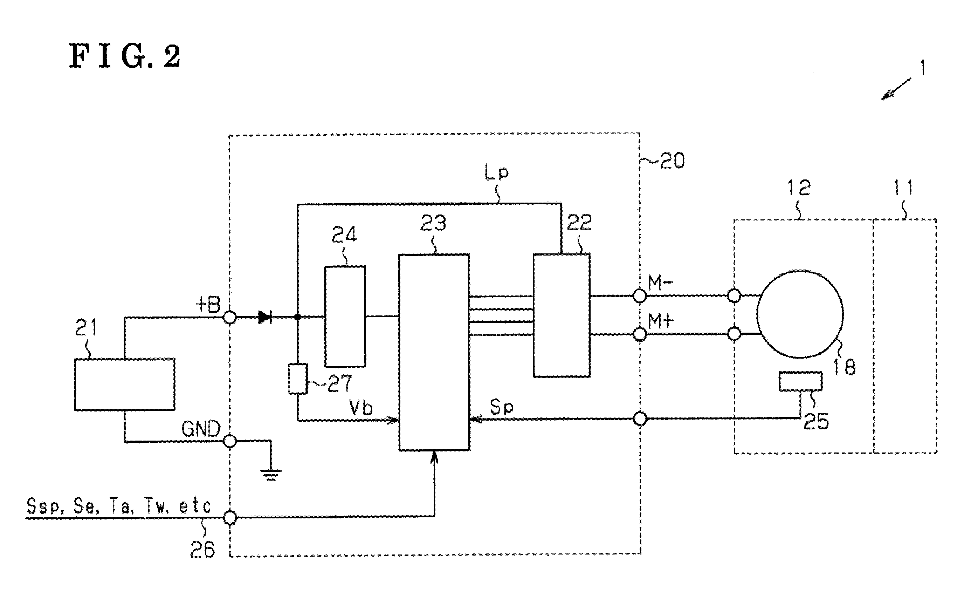

The actuator portion 12 drives the movable fins 14 of the shutter mechanism 11 to rotate by a motor driving. As illustrated in Fig. 2, a motor 18 serving as a drive source of the actuator portion 12 rotates by a driving power supplied from an ECU (Electronic Control Unit) 20.

The ECU 20 serving as a control device operates the actuator portion 12 by the supply of the driving power to the motor 18, i.e., controls opening and closing operations of the shutter mechanism 11. As illustrated in Fig. 1, according to the grille shutter device 10 of the embodiment, the flow rate of air flowing into the engine compartment 3 from the grille opening portion 7 is controllable on a basis of the opening and closing operations of the shutter mechanism 11 caused by the rotation of each of the movable fins 14.

Specifically, as illustrated in Fig. 2, the ECU 20 includes a drive circuit 22 provided at a portion of a power supply passage Lp between an in-vehicle power source (a battery) 21 and the motor 18, and a microcomputer 23 serving as a control circuit for controlling an operation of the drive circuit 22.

The drive circuit 22 includes a known PWM inverter in which plural switching arms are connected in parallel in a state where a pair of switching elements serially connected serves as each switching arm. A brush DC motor is applied to the motor 18 according to the embodiment. The PWM inverter provided at the drive circuit 22 is an H-bridge inverter so as to conform to the brush DC motor. The microcomputer 23 outputs a motor control signal for specifying an on/off state of each of the switching elements to control the operation of the drive circuit 22.

A power supply voltage Vb, which is output from the in-vehicle power source 21, is input to the drive circuit 22. A control circuit voltage, which is regulated or adjusted by a power supply circuit 24, is input to the microcomputer 23. The microcomputer 23 switches a power supply direction of the driving power supplied to the motor 18 from the drive circuit 22 by changing combinations of the switching elements to be turned on.

The microcomputer 23 controls a duty ratio of each of the switching elements to be turned on. That is, the microcomputer 23 controls a duty ratio of the drive circuit 22. The drive circuit 22 outputs the driving power to the motor 18 based on the power supply voltage Vb input to the drive circuit 22 and the duty ratio indicated by the motor control signal.

According to the present embodiment, a motor rotation sensor 25 outputting a pulse signal Sp synchronized with the rotation of the motor 18 is provided at the actuator portion 12. The microcomputer 23 counts edges of the pulse signal Sp to detect an operation position, i.e., an open/closed state, of the shutter mechanism 11. The ECU 20 receives a vehicle state quantity including a vehicle speed Ssp, an engine speed (engine revolutions) Se, a cooling water temperature Tw, and an outside air temperature Ta, for example, via an in-vehicle network 26. According to the present embodiment, the ECU 20 serves as a vehicle speed detection portion and an engine speed detection portion. The microcomputer 23 controls the shutter mechanism 11 to open and close, i.e., performs an opening and closing control of the shutter mechanism 11, based on detections of the aforementioned vehicle state quantity.

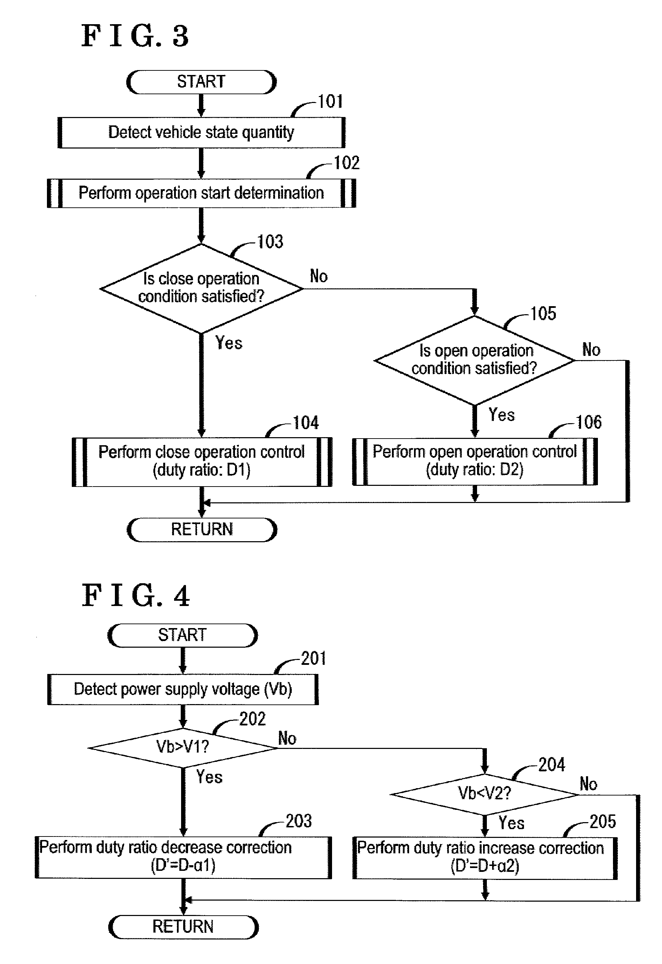

Specifically, as illustrated by a flowchart in Fig. 3, the microcomputer 23 detects the vehicle state quantity in step 101 and performs an operation start determination of the shutter mechanism 11 in step 102. Then, the microcomputer 23 determines whether or not a close operation condition of the shutter mechanism 11 is satisfied in step 103. In a case where the close operation condition is satisfied, i.e., YES is determined in step 103, the drive circuit 22 is controlled so that the electric current of the motor 18 (motor current) flows in a direction in which the close operation of the shutter mechanism 11 is conducted. That is, a close operation control is performed in step 104.

In a case where the close operation condition is not satisfied in step 103, the microcomputer 23 then determines whether or not an open operation condition of the shutter mechanism 11 is satisfied in step 105. When the open operation condition is satisfied, YES is determined in step 105, the drive circuit 22 is controlled so that the motor current flows in a direction in which the open operation of the shutter mechanism 11 is conducted. That is, an open operation control is performed in step 106.

The microcomputer 23 specifies a duty radio D of the drive circuit 22 to a value D1 (D=D1) in the close operation in step 104. In addition, the microcomputer 23 specifies the duty ratio D to a value D2 (D=D2) in the open operation in step 106.

As illustrated in Fig. 2, the microcomputer 23 serving as a power supply voltage detection portion detects the power supply voltage Vb of the in-vehicle power source 21 input to the drive circuit 22 based on an output signal of a voltage sensor 27 serving as the power supply voltage detection portion. The microcomputer 23 then corrects or adjusts the duty ratio D of the drive circuit 22 based on the detected power supply voltage Vb so as to restrain a change of a speed of the motor 18 caused by a fluctuation or variation of the power supply voltage Vb. That is, the microcomputer 23 performs a duty ratio correction control.

Specifically, as illustrated by a flowchart in Fig. 4, the microcomputer 23 serving as a correction portion detects the power supply voltage Vb in step 201 and compares the detected power supply voltage Vb with a first predetermined threshold value V1 serving as an upper threshold value and a first voltage value specified to be greater than a reference value V0 of the power supply voltage Vb in step 202. In a case where the detected power supply voltage Vb is greater than the first predetermined threshold value V1, i.e., YES is determined in step 202, the microcomputer 23 performs a correction by subtracting a first predetermined correction value α1 serving as a correction amount from the duty ratio D of the drive circuit 22 so as to obtain a value obtained after the correction (D') being smaller than the value obtained before the correction (D). That is, the microcomputer 23 performs a duty ratio decrease correction in step 203.

In a case where the detected power supply voltage Vb is equal to or smaller than the first predetermined threshold value V1, the microcomputer 23 compares the detected power supply voltage Vb with a second predetermined threshold value V2 serving as a lower threshold value and a second voltage value specified to be smaller than the reference value V0 in step 204. When the detected power supply voltage Vb is smaller than the second predetermined threshold value V2, i.e., YES is determined in step 204, the microcomputer 23 performs a correction by adding a second predetermined correction value α2 serving as the correction amount to the duty ratio D of the drive circuit 22 so as to obtain the value obtained after the correction (D') being greater than the value obtained before the correction (D). That is, the microcomputer 23 performs a duty ratio increase correction in step 205.

The values D1 and D2 specified to the duty ratio D by the microcomputer 23 in the close operation control (step 104 in Fig. 3) and the open operation control (step 106 in Fig. 3) respectively are applied and valid in a state where the power supply voltage Vb is equal to the reference value V0. In a case where the detected power supply voltage Vb is equal to or greater than the second predetermined threshold value V2 in step 204, i.e., the power supply voltage Vb is within a predetermined range from the reference value V0 (V2≤Vb≤V1), the microcomputer 23 is inhibited from correcting the duty ratio D of the drive circuit 22.

According to the aforementioned duty ratio correction control based on the power supply voltage Vb in procedures from step 201 to step 205, in a case where the power supply voltage Vb increases above the first predetermined threshold value V1 (>V0), the duty radio D of the drive circuit 22 is corrected to a smaller value than the value obtained before the correction. Thus, an increase of an output of the motor 18 (motor output) caused by the increase of the power supply voltage Vb may be restrained. As a result, the change of the speed of the motor 18, i.e., the change of the operation speed of the shutter mechanism 11, may be restrained.

In a case where the power supply voltage Vb decreases below the second predetermined threshold value V2 (<V0), the duty ratio D is corrected to a greater value than the value obtained before the correction. Thus, a decrease of output of the motor 18 caused by the decrease of the power supply voltage Vb may be restrained. As a result, the change of the speed of the motor 18, i.e., the change of the operation speed of the shutter mechanism 11, may be restrained.

According to the aforementioned embodiment, the microcomputer 23 controls the duty ratio of the drive circuit 22 provided at the portion of the power supply passage Lp between the in-vehicle power source 21 and the motor 18. In addition, the microcomputer 23 detects the power supply voltage Vb. Then, the microcomputer 23 corrects the duty ratio D of the drive circuit 22 so as to restrain the change of the speed of the motor 18 caused by the fluctuation of the power supply voltage Vb based on the detected power supply voltage Vb.

Accordingly, even in a case where the power supply voltage Vb of the in-vehicle power source 21 fluctuates, the change of the speed of the motor 18 caused by the fluctuation of the power supply voltage Vb may be restrained. As a result, the operation speed change of the shutter mechanism 11 may be restrained to achieve both quietness and high responsiveness of the shutter mechanism 11, i.e., of the grille shutter device 10.

In addition, in a case where the detected power supply voltage Vb is greater than the first predetermined threshold value V1, the microcomputer 23 performs the correction by subtracting the first predetermined correction value α1 from the duty ratio D of the drive circuit 22 so as to obtain the value obtained after the correction (D') being smaller than the value obtained before the correction (D).

Accordingly, the duty ratio D of the drive circuit 22 is corrected to a small value to thereby restrain the increase of the motor output caused by the increase of the power supply voltage Vb. As a result, the operation speed of the shutter mechanism 11 is inhibited from increasing by the increase of the speed of the motor 18. The operating noise or operating sound of the shutter mechanism 11 is restrained to ensure quietness of the grille shutter device 10.

In a case where the detected power supply voltage Vb is smaller than the second predetermined threshold value V2, the microcomputer 23 performs the correction by adding the second predetermined correction value α2 to the duty ratio D of the drive circuit 22 so as to obtain the value obtained after the correction (D') being greater than the value obtained before the correction (D).

Accordingly, the duty ratio D of the drive circuit 22 is corrected to a large value to thereby restrain the decrease of the motor output caused by the decrease of the power supply voltage Vb. As a result, the operation speed of the shutter mechanism 11 is inhibited from decreasing by the decrease of the speed of the motor 18 (motor speed) and the high responsiveness is ensured. In addition, instability of the opening and closing operations of the shutter mechanism 11 caused by the decrease of the motor output may be inhibited.

The aforementioned embodiment may be changed or modified as follows. According to the aforementioned embodiment, air from the grille opening portion 7 flows into the engine compartment 3 formed at the vehicle body 2. Alternatively, air may flow into the inner space of the vehicle body 2, instead of the engine compartment 3, at which a flow rate of air is controllable on a basis of the opening and closing operations of the shutter mechanism 11. Air may flow into a housing of a heat exchanger such as the radiator 5, for example, serving as a void to which air from the grille opening portion 7 is led. The grille shutter device 10 of the present embodiment may be applied to a vehicle in which an engine is arranged at a rear portion or a center of a vehicle body, or to an electric vehicle in which an engine is inhibited from being mounted to an inner space of a vehicle body in front of a vehicle cabin.

According to the aforementioned embodiment, the grille opening portion 7 is formed at a lower side of the bumper 8. Alternatively, the grille opening portion 7 may be formed at an upper side of the bumper 8. That is, the front grille 9 may be an upper grille.

In addition, according to the aforementioned embodiment, the shutter mechanism 11 is opened and closed, i.e., performs the opening and closing operations, on a basis of the rotations of the movable fins 14. Alternatively, the operation of the shutter mechanism 11 may be achieved by sliding or swinging of a movable member, for example.

Further, according to the aforementioned embodiment, the detected power supply voltage Vb is compared with each of the first and second predetermined threshold values V1 and V2 so as to determine whether or not the power supply voltage Vb is within the predetermined range from the reference value V0 in step 202 and step 204 in Fig. 4. Then, in a case where the power supply voltage Vb fluctuates beyond the predetermined range, the duty ratio decrease correction using the first predetermined correction value α1 or the duty ratio increase correction using the second predetermined correction value α2 is performed to correct the duty ratio D of the drive circuit 22 in step 203 and step 205. Alternatively, when the power supply voltage Vb fluctuates, the duty ratio D may be corrected so that the motor speed is constant.

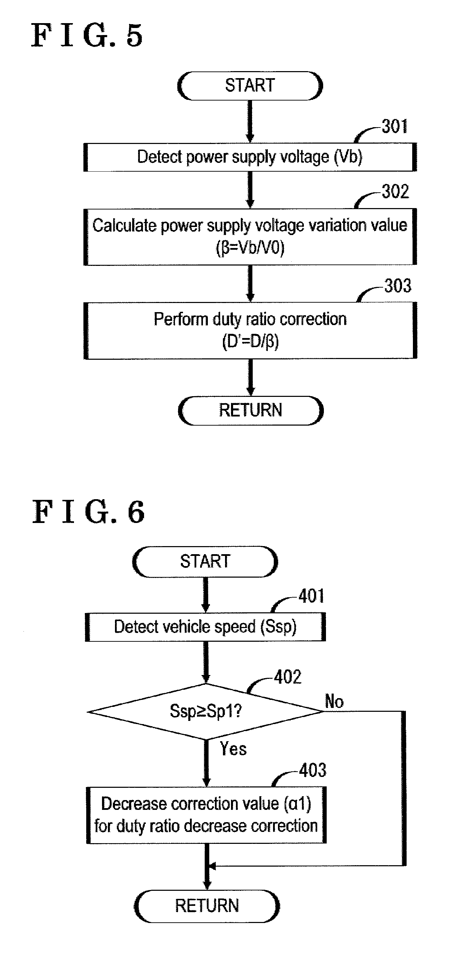

Specifically, as illustrated by a flowchart in Fig. 5, the power supply voltage Vb detected in step 301 is divided by the reference value V0 of the power supply voltage Vb to calculate a power supply voltage variation value β (β=Vb/V0) in step 302. Then, a value obtained by dividing the duty ratio D by the power supply voltage variation value β may be a new duty ratio D' (D'=D/β) in step 303. Accordingly, both the quietness and responsiveness may be achieved at a higher level. In the configuration where the duty ratio D is corrected so that the motor speed is constant, the correction may be started when the power supply voltage Vb fluctuates beyond the predetermined range (V2≤Vb≤V1).

The correction value α1 or α2 of the duty ratio D may be changed on a basis of the vehicle speed Ssp. For example, as illustrated by a flowchart in Fig. 6, the vehicle speed Ssp is detected in step 401. Then, it is determined whether or not the detected vehicle speed Ssp is equal to or greater than a predetermined threshold value SP1 serving as a first vehicle speed in step 402. In a case where the vehicle speed Ssp is equal to or greater than the predetermined threshold value SP1, the first predetermined correction value α1 may be reduced or become zero in the duty ratio decrease correction in step 403.

In a case where the vehicle speed Ssp increases, noises or sounds such as a vehicle driving sound and an engine noise, for example, increase. As a result, the operating noise of the grille shutter device 10 may become less obvious. Accordingly, in such case, the first predetermined correction value α1 may be reduced, i.e., changed to a small value, or become zero in the duty ratio decrease correction so that the increase of the motor output caused by the increase of the power supply voltage Vb may become a benefit of the improved responsiveness.

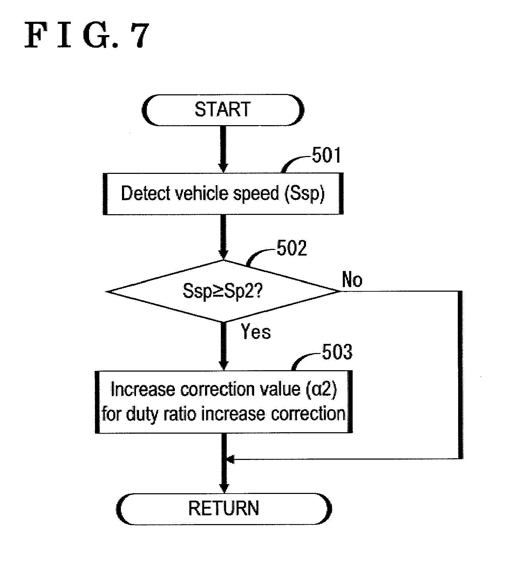

Further, as illustrated by a flowchart in Fig. 7, the vehicle speed Ssp is detected in step 501. Then, it is determined whether or not the detected vehicle speed Ssp is equal to or greater than a predetermined threshold value SP2 serving as a second vehicle speed in step 502. In a case where the vehicle speed Ssp is equal to or greater than the predetermined threshold value SP2, the second predetermined correction value α2 may be changed to a large value in the duty ratio increase correction as illustrated in step 205 in Fig. 4. That is, when the vehicle speed Ssp increases, a wind pressure applied to the shutter mechanism 11 increases. Thus, in a case where the power supply voltage decreases under the aforementioned circumstances, the second predetermined correction value α2 is brought to increase to thereby further stably open and close the shutter mechanism 11.

The first and second predetermined threshold values V1 and V2 for the power supply voltage Vb may be changed on a basis of the vehicle speed Ssp. In such case, the same effect as that obtained when the correction value is changed on a basis of the vehicle speed Ssp (see Figs. 6 and 7) may be obtained.

Instead of the vehicle speed Ssp, the engine speed Se may be used. In such case, the same effect as mentioned above may be obtained. According to the aforementioned embodiment, the duty ratio D for the close operation control (D=D1) and the duty ratio D for the open operation control (D=D2) are different from each other. Alternatively, the same duty ratio D may be used for both the close operation control and the open operation control. In addition, the duty radio D may be controlled by other elements than the fluctuation of the power supply voltage so as to be corrected.

The first and second predetermined correction values α1 and α2 for the duty ratio decrease correction and the duty ratio increase correction may be the same values. Further, the duty ratio D may be corrected greater as the power supply voltage Vb deviates from the predetermined range (V2≤b≤V1) greater. For example, in a case of the duty ratio decrease correction, a formula of D'=D-α0x(Vb-V1) may be specified. In a case of the duty ratio increase correction, a formula of D'=D+α0x(V2-Vb) may be specified. In each of the aforementioned formulas, the value α0 is a basal correction value. As a result, the further improved quietness and responsiveness at a higher level may be both achieved.

A configuration where either the correction for decreasing the value obtained after the correction (D') relative to the value obtained before the correction (D) or the correction for increasing the value obtained after the correction (D') relative to the value obtained before the correction (D) may be applied. That is, a detailed correction may be appropriately changed or modified in view of an influence of the speed change of the motor 18.

According to the aforementioned embodiment, the first predetermined threshold value V1 is specified as the upper threshold value applied to the case where the detected power supply voltage Vb increases above the reference value V0. The second predetermined threshold value V2 is specified as the lower threshold value applied to the case where the detected power supply voltage Vb decreases below the reference value V0. Then, a range where the correction is not performed, i.e., the predetermined range (V2≤Vb≤ V1), is defined in a state where the first predetermined threshold value V1 serves as an upper limit value while the second predetermined threshold value V2 serves as a lower limit value relative to the reference value V0 serving as a third voltage value. Because the microcomputer 23 is inhibited from correcting the duty ratio D within the predetermined range between the predetermined first and second predetermined threshold values V1 and V2, the correction is performed when necessary. Alternatively, one of or both of the first and second predetermined threshold values V1 and V2 may be equal to the reference value V0.

That is, the first predetermined threshold value V1 is equal to the reference value V0 so that the correction for decreasing the duty ratio D may be promptly performed in a case where the detected power supply voltage Vb exceeds the reference value V0. In addition, the second predetermined threshold value V2 is equal to the reference value V0 so that the correction for increasing the duty ratio D may be promptly performed in a case where the detected power supply voltage Vb is below the reference value V0. Further, both the first and second predetermined threshold values V1 and V2 are equal to the reference value V0 so that the duty ratio D may be promptly corrected in a case where the detected power supply voltage Vb is different from the reference value V0.

According to the aforementioned embodiment, the grille shutter device 10 includes the engine speed detection portion (i.e., the ECU 20) detecting the engine speed. Then, the microcomputer 23 (the correction portion) changes the correction value of the duty ratio based on the detected engine speed.

According to the grille shutter device 10 of the aforementioned embodiment, both the quietness and high responsibility may be achieved even in a case where the power supply voltage Vb fluctuates.

## Claims

1. A grille shutter device (10) comprising:
a shutter mechanism (11) provided within a grille opening portion (7) that is formed at a front portion of a vehicle body (2) and configured to control a flow rate of air into the vehicle body (2);
a drive device (12) driven by a motor (18) to open and close the shutter mechanism (11); and
a control device (20) supplying a driving power to the motor (18) to control an operation of the drive device (12);
the control device (20) including a drive circuit (22) provided at a portion of a power supply passage (Lp) between an in-vehicle power source (21) and the motor (18), a control circuit (23) controlling a duty ratio (D) of the drive circuit (22), and a power supply voltage detection portion (27, 23) detecting a power supply voltage (Vb) of the in-vehicle power source (21), the control circuit (23) including a correction portion correcting the duty ratio (D) based on the power supply voltage (Vb) to restrain a change of a speed of the motor (18) caused by a fluctuation of the power supply voltage (Vb).

2. The grille shutter device (10) according to Claim 1, wherein the correction portion (23) corrects the duty ratio (D) to a smaller value than a value obtained before a correction in a case where the power supply voltage (Vb) is greater than a first voltage value (V1).

3. The grille shutter device (10) according to Claim 1, wherein the correction portion (23) corrects the duty ratio (D) to a greater value than a value obtained before a correction in a case where the power supply voltage (Vb) is smaller than a second voltage value (V2).

4. The grille shutter device (10) according to Claim 2, wherein the correction portion (23) corrects the duty ratio (D) to a greater value than the value obtained before the correction in a case where the power supply voltage (Vb) is smaller than a second voltage value (V2).

5. The grille shutter device (10) according to any one of Claims 1 through 4, wherein the correction portion (23) corrects the duty ratio (D) so that the speed of the motor (18) is constant.

6. The grille shutter device (10) according to any one of Claims 1 through 5, further comprising a vehicle speed detection portion (20) detecting a vehicle speed (Ssp), wherein the correction portion (23) changes a correction amount of the duty ratio (D) based on the vehicle speed (Ssp).

7. The grille shutter device (10) according to Claim 2, further comprising a vehicle speed detection portion (20) detecting a vehicle speed (Ssp), wherein the correction portion (23) decreases a correction amount of the duty ratio (D) at a time of correcting the duty ratio (D) to the smaller value than the value obtained before the correction in a case where the vehicle speed (Ssp) is equal to or greater than a first vehicle speed (SP1).

8. The grille shutter device (10) according to Claim 3, further comprising a vehicle detection portion (20) detecting a vehicle speed (Ssp), wherein the correction portion (23) increases a correction amount of the duty ratio (D) at a time of correcting the duty ratio (D) to the greater value than the value obtained before the correction in a case where the vehicle speed (Ssp) is equal to or greater than a second vehicle speed (SP2).

9. The grille shutter device (10) according to Claim 4, wherein the first voltage value (V1) is specified to be greater than a third voltage value (V0) and the second voltage value (V2) is specified to be smaller than the third voltage value (V0).

10. The grille shutter device (10) according to Claim 4, wherein the first voltage value (V1) is equal to the second voltage value (V2).
